# EUROPÄISCHE PATENTSCHRIFT

(11) **EP 0 888 400 B1**
(45) Veröffentlichungstag und Bekanntmachung des Hinweises auf die Patenterteilung: **12.12.2001**
(21) Anmeldenummer: 97907083.6
(22) Anmeldetag: 08.03.1997
(51) Int. Cl.: C08J 9/32

(54) **BESCHICHTETE MIKROHOHLKUGELN ENTHALTENDE POLYURETHANZUSAMMENSETZUNG**
POLYURETHANE COMPOSITIONS CONTAINING COATED HOLLOW MICROBEADS
COMPOSITION DE POLYURETHANNE CONTENANT DES MICROSPHERES CREUSES ENROBEES

(30) Priorität: 23.03.1996 DE 19611594
(43) Veröffentlichungstag der Anmeldung: 07.01.1999
(73) Patentinhaber: Enichem Polyurethane Deutschland GmbH, 49090 Osnabrück (DE); Hago Dr. Schirm Chemotechnik GmbH & Co. Chem. Techn. Produkte KG, 81243 München (DE)
(72) Erfinder: MACK, Thomas, D-49090 Osnabrück (DE); VOGEL, Günter, M., D-81243 München (DE)
(74) Vertreter: Hoffmeister, Helmut, Dr. Dipl.-Phys.
(86) Internationale Anmeldenummer: EP9701180
(87) Internationale Veröffentlichungsnummer: WO9735913

(56) Entgegenhaltungen:
- EP-A- 0 545 317

## Beschreibung

Die Erfindung betrifft ein Komponenten-Gemisch auf der Grundlage eines Polyurethanprepolymers mit wenigstens einem zusätzlichen Wirk- oder Füllstoff zur Herstellung einer geschäumten Dichtungs- und Isoliermasse oder eines Einkomponenten- oder Zweikomponenten-Sprühschaumstoffes. Dieses Komponentengemisch kann sukzessiv oder gleichzeitig in eine Spraydose zusammen mit einem Treibgas eingefüllt werden. Nach Verlassen der Sprühdose geht es unter Einwirkung von Feuchtigkeit in ein vernetztes Polyurethan mit eingebautem Wirk- oder Füllstoff über, wobei dieser im wesentlichen aus Mikrohohlkugeln besteht.

Einkomponenten- und Zweikomponenten-Polyurethan-Gemische werden in Sprühdosen oder in Kartuschen abgefüllt, aus denen sie unter hohem Druck, der entweder durch ein Treibmittel oder durch Kolbendruck erzeugt wird, herausgesprüht oder herausgespritzt werden. DE-A-31 00 746 beschreibt zum Beispiel eine Dichtungsmasse, die zur Anwendung aus einer Kartusche heransgedrückt wird. Dieser Dichtungsmasse werden gute thixotrope Eigenschaften verliehen, indem ihr kleinste, druckelastische Mikrohohlkugeln beigefügt werden, deren dünne Hülle aus Vinylidenchlorid-Acrylnitril-Copolimerisat besteht und die einen hohlen Kern besitzen.

Der Partikeldurchmesser derartiger Mikrohohlkugeln liegt im allgemeinen zwischen 25 und 150 µm, vorzugsweise zwischen 50 und 100 µm.

Da derartige Komponenten-Gemische in erster Linie in der Bauindustrie zum Einsatz kommen, ist es für den Fall, daß sie auf vertikale Wände gespritzt werden, von großer Wichtigkeit, daß nach dem Auftreffen und während des Schäumvorganges kein unerwünschtes Fließen der noch nicht ausgehärteten Masse erfolgt. Das "Erstarren" von Flüssigkeiten bei Wegfall von Scherkräften wird als Thixotropie bezeichnet. Je besser die thixotropen Eigenschaften sind, umso weniger wird ein Nachfließen zu beobachten sein. Allerdings ist festzustellen, daß es zur Herstellung der thixotropen Eigenschaften mit Sicherheit nicht ausreicht, diese Komponenten-Gemische lediglich mit einem Füller zu versehen, beispielsweise einem solchen, wie er in der Farben- und Lackindustrie bekannt ist, also z.B. Bentonit, sondern es zeigt sich, daß gerade bei Polyurethan-Schaumstoffen, seien sie ein- oder zweikomponentig, es auf die Zusammensetzung und die chemischen sowie physikalischen Eigenschaften von Füllstoffen wesentlich ankommt.

So hat sich auch erwiesen, daß die in der OS 31 00 746 vorgeschlagenen Mikrohohlkugeln mit einer Hülle aus Vinylidenchlorid-Acrylnitril-Copolimerisat der Thixotropie-Effekt nicht ideal vollzogen ist, sondern sich weiterhin ein unerwünschtes Fließen des aus dem Druckbehälter ausgedrückten Komponenten-Gemisches zeigt.

Es stellt sich daher die Aufgabe, das Thixotropie-Verhalten des bekannten Komponenten-Gemisches zu verbessern.

Diese Aufgabe wird gelöst bei einem Komponenten-Gemisch der eingangs genannten Art unter Verwendung von Mikrohohlkugeln, die eine äußere Schale aus einem anorganischen und schwer wasserlöslichem Carbonat, Sulfat oder Oxid besitzen.

Die beschichteten Mikroholkugeln haben einen Durchmesser zwischen 5 und 150 *µ*m und sind in dem Komponentengemisch in einer menge von 0,1 bis 10,0 Gew.-% enthalten.

Derartige Mikrohohlkugeln besitzen vorzugsweise eine Beschichtung aus Calziumcarbonat (CaCO₃), aus Bariumcarbonat (BaCO₃) oder Magnesiumcarbonat (Magnerit); es hat sich aber auch eine Beschichtung aus Calziumsulfat (CaSO₄) oder Bariumsulfat sowie Silizium- oder Aluminiumoxid als anwendbar erwiesen.

Erstaunlich ist, daß nur eine geringe Menge von diesen Mikrohohlkugeln ausreicht, um die erwünschten Thixotropie-Eigenschaften zu erzielen. So haben sich Mengen von 1,0 bis 5,0 Gew.-% im Komponenten-Gemisch (ohne die Anrechnung von Treibgasen) als ausreichend erwiesen.

Um die bereits bekannte Technologie der Herstellung von Mikrohohlkugeln zu nutzen, wird vorgeschlagen, daß die innere Schale aus einem Copolymerisat aus Polyvinylidenchlorid oder Acrylnitril bzw. deren Copolymerisaten hergestellt ist, die wiederum sich relativ einfach mit einem Carbonat, Sulfat oder Oxid beschichten lassen. Es zeigt sich, daß die Verwendung der vorgenannten Mikrohohlkugeln im Gegensatz zu anderen Wirkstoffen/Füllstoffen beim Applizieren eines Komponenten-Gemisches einen Frothing-Effekt bzw. eine erstaunlich hohe Thixotropie zeigt, d.h. auch bei Spritzen an eine senkrechte Wand erfolgt keinerlei Ablauf.

Damit läßt sich das Komponenten-Gemisch auch an unzugänglichen Stellen, ohne daß das Material wegläuft, anwenden. Breite Spalten können damit gefüllt werden. Es lassen sich stand- und ablauffeste Sprühschäume herstellen, wobei sogar unter ökologischen Gesichtspunkten die Reduzierung des Treibgases möglich ist. Durch die gegebenen chemischen und physikalischen Wechselwirkungen des Werkstoffes/Füllstoffes mit dem Komponentengemisch läßt sich ebenfalls eine Reduzierung der Prepolymerfüllmenge erreichen.

Derartige Mikrohohlkugeln, die eine Schüttdichte von 0,05 bis 0,7 g/cm³ besitzen, haben ein pulvriges Aussehen, wobei die durchschnittliche Teilchengröße etwa zwischen 20 und 70 µm liegt. Ihre Druckbeständigkeit ist auch bei 400 bar noch als gut zu bezeichnen, womit sie sowohl für die Verarbeitung als auch für die Anwendung ausreichend stabil sind.

Insbesondere hat sich eine Konstellation als vorteilhaft erwiesen, bei der Mikrohohlkugeln verwendet sind, die
- eine innere Schale aus einem Polymerisat aus Polyvinylidenchlorid oder Acrylnitril oder deren Copolymerisat besitzen,
- die mit einer äußeren Schale (Beschichtung) aus einem anorganischen und schwer wasserlöslichen Carbonat, Sulfat oder Oxid versehen ist,
- einen Durchmesser zwischen 5 und 150 *µ*m und
- eine Schüttdichte von 0,05 bis 0,7 g/cm³ haben

Dabei kann herausgestellt werden, daß sowohl ein Zweikomponenten-Polyurethan-Gemisch als auch ein Einkomponenten-Gemisch auf Polyol-Polyisocyanat-Grundlage verwendbar ist. Eine Beschreibung der Gruppe vernetzter Polyurethane, die durch Polyadditionsreaktionen von Isocyanaten und Polyolen hergestellt werden können, findet sich im KUNSTSTOFF-HANDBUCH; Band VII; 3. Aufl.; 1993, Hanser-Verlag.

Übliche Additive, wie Vernetzer, Kettenverlängerungsmittel, Aktivatoren, Stabilisatoren, Flammschutzmittel und dgl. können dem Komponenten-Gemisch in üblicher Weise beigemischt werden oder sind bereits Bestandteil der Komponenten. Das Einrühren der Mikrohohlkugeln in die jeweiligen Komponenten ist einfach und kann auf beliebige Art durchgeführt werden, ebenso wie das Einfüllen der Komponenten-Gemische in Kartuschen oder Sprühdosen.

Ausführungsbeispiele der Erfindung sind nachfolgend beschrieben:

### Beispiel 1

Es wird ein Komponenten-Gemisch zum Einfüllen in eine Spray-dose hergestellt, bestehend aus einer Polyolformulierung und einem sog. Roh-MDI (Tedimon 31; Handelsname der EiniChem Polyurethane Division).

Die Komponenten werden mit 4,3 Gew.-% (bezogen auf die Gesamtmenge) an Mikrohohlkugeln, die eine Schale aus Polyvinylidenchlorid-Acrylnitril-Copolimerisat und einem Außenmantel aus Calziumcarbonat besitzen, trocken gemischt. Das Gemisch wird mit einer ausreichenden Treibgasmenge in eine Sprühdose eingefüllt. Es ergibt sich ein ausreichend thixotroper Schaum, der beim Aufspritzen auf eine vertikale Wand nicht abläuft.

### Beispiel 2

Es wird ein Gemisch aus einer Polyolformulierung, basierend auf einer Mischung Polyetherpolyole der OH-Zahl 140 - 180 bzw. 100 - 120 sowie einem Polyesterpoliol der OH-Zahl 280 - 320, inklusive der üblichen Zuschlagstoffe mit einem sog. Roh-MDI (Tedimon 31) in einem Mengenverhältnis von 2,3 : 3.1 hergestellt. Dem Gemisch werden 3,5 Gew.-% Mikrohohlkugeln des Typs Polyvinylidenchlorid-Acrylnitril-Copolymerisat, die einen Mantel aus Bariumcarbonat besitzen, beigemischt und mit einer ausreichenden Menge Treibgas versetzt. Es ergibt sich hierein ein relativ schwerer Schaum, der gerade noch Thixotropie-Verhalten zeigt und auf einer senkrechten Wand nicht abläuft.

### Beispiel 3

Anstelle der Mikrohohlkugeln mit Calciumcarbonat-Mantel (Beispiel 1) werden solche mit einem Mantel aus Magnesiumcarbonat verwendet. Es ergibt sich eine ähnliche Thixotropierung wie bei Beispiel 1.

### Beispiel 4

Anstelle der Mikrohohlkugeln mit Calciumcarbonat-Mantel (Beispiel 1) werden solche mit einem Mantel aus Silicium- oder Aluminiumoxid, zu 50:50 Teilen gemischt, verwendet. Es ergibt sich eine ähnliche Thixotropierung wie bei Beispiel 1.

## Patentansprüche

1. Komponentengemisch
- auf der Grundlage eines Polyurethanprepolymers mit wenigstens einem Wirk- oder Füllstoff,
- zum gleichzeitigen oder sukzessiven Einfüllen in eine Spraydose,
- aus welcher es mithilfe eines Treibgases zur Herstellung einer geschäumten Dichtungs- und Isoliermasse oder eines Einkomponenten- oder Zweikomponenten-Sprühschaumstoffes herausspritzbar ist,
- wobei das Komponentengemisch nach Verlassen der Spray-dose unter Einwirkung von Feuchtigkeit in ein vernetztes Polyurethan mit eingebautem Wirk- oder Füllstoff übergeht,
- und bei dem der Wirk- oder Füllstoff aus Mikrohohlkugeln besteht, die eine äußere Schale aus einem anorganischen und schwer wasserlöslichen Carbonat, Sulfat oder Oxid besitzen
- und als beschichtete Mikrohohlkugeln einen Durchmesser zwischen 5 und 150 µm aufweisen,
- wobei in dem Komponentengemisch eine Menge von 0,1 bis 10,0 Gew.-% Mikrokugeln enthalten ist.

2. Komponentengemisch nach Anspruch 1, **dadurch gekennzeichnet, daß** die beschichteten Mikrohohlkugeln eine Schüttdichte von 0,05 bis 0,7 g/cm³ besitzen.

3. Komponentengemisch nach Anspruch 1, **dadurch gekennzeichnet, daß** die Mikrohohlkugeln
- eine innere Schale aus einem Polymerisat aus Polyvinylidenchlorid oder Acrylnitril oder deren Copolymerisat besitzen,
- die mit einer äußeren Schale (Beschichtung)aus einem anorganischen und schwer wasserlöslichen Carbonat, Sulfat oder Oxid versehen ist,
- einen Durchmesser zwischen 5 und 150 µm und
- eine Schüttdichte von 0,05 bis 07 g/cm³ haben.

4. Komponentengemisch nach Anspruch 1 oder 3, **dadurch gekennzeichnet, daß** die Beschichtung aus Calciumcarbonat, Bariumcarbonat oder Magnesiumcarbonat besteht.

5. Komponentengemisch nach Anspruch 1 oder 3, **dadurch gekennzeichnet, daß** die Beschichtung aus Calciumsulfat oder Bariumsulfat besteht.

6. Komponentengemisch nach Anspruch 1 oder 3, **dadurch gekennzeichnet, daß** die Beschichtung aus Siliciumoxid oder Aluminiumoxid besteht.

## Claims

1. A component mixture
- on the basis of a polyurethane prepolymer with at least one active substance or filler,
- for simultaneous or successive filling into a spray can,
- out of which it can be sprayed by means of a propellant to produce a foamed sealing and insulating compound or a one-component or two-component sprayed foam compound,
- wherein the component mixture after leaving the spray can changes into a cross-linked polyurethane with incorporated active substance or filler under the action of moisture,
- and in which the active substance or filler consists of hollow microspheres which have an outer shell consisting of an inorganic, sparingly water-soluble carbonate, sulphate or oxide,
- and as coated hollow microspheres have a diameter of between 5 and 150 µm,
- wherein a quantity of 0.1 to 10.0% by weight microspheres is contained in the component mixture.

2. A component mixture according to Claim 1, **characterised in that** the coated hollow microspheres have a bulk density of 0.05 to 0.7 g/cm³.

3. A component mixture according to Claim 1, **characterised in that** the hollow microspheres
- have an inner layer of a polymer consisting of polyvinylidene chloride or acrylonitrile or a copolymer thereof,
- which is provided with an outer shell (coating) consisting of an inorganic, sparingly water-soluble carbonate, sulphate or oxide,
- have a diameter of between 5 and 150 µm and
- a bulk density of 0.05 to 0.7 g/cm³.

4. A component mixture according to Claim 1 or 3, **characterised in that** the coating consists of calcium carbonate, barium carbonate or magnesium carbonate.

5. A component mixture according to Claim 1 or 3, **characterised in that** the coating consists of calcium sulphate or barium sulphate.

6. A component mixture according to Claim 1 or 3, **characterised in that** the coating consists of silicon oxide or aluminium oxide.

## Revendications

1. Mélange de constituants
- à base d'un prépolymère de polyuréthane comportant en plus au moins une matière active ou de remplissage,
- pour servir simultanément ou successivement au remplissage d'un récipient aérosol,
- hors duquel il peut être pulvérisé, à l'aide d'un gaz propulseur, pour produire une masse d'étanchéité et d'isolation sous forme de mousse ou une mousse de pulvérisation à un composant ou à deux composants,
- le mélange de constituants, en sortie du récipient aérosol, se transformant sous l'action de l'humidité en un polyuréthane réticulé incorporant la matière active ou de remplissage,
- dans lequel la matière active ou de remplissage est constituée de microbilles creuses qui comportent une peau extérieure en un carbonate, sulfate ou oxyde inorganique peu soluble dans l'eau
- et où les microbilles, en tant que microbilles creuses à enrobage, présente un diamètre compris entre 5 et 150 µm,
- dans lequel le mélange de constituants comprend une quantité de microbilles comprise entre 0,1 et 10,0 % en poids.

2. Mélange de constituants selon la revendication 1, **caractérisé en ce que** les microbilles creuses enrobées ont une densité apparente comprise entre 0,05 et 0,7 g/cm³.

3. Mélange de constituants selon la revendication 1, **caractérisé en ce que** les microbilles
- présentent une peau intérieure en un produit de polymérisation en chlorure de polyvinylidène ou en nitrile acrylique ou leurs copolymères,
- qui est munie d'une peau extérieure (enrobage) en un carbonate, sulfate ou oxyde inorganique et difficilement soluble dans l'eau,
- et présentent un diamètre compris entre 5 et 150 µm,
- et une densité apparente comprise entre 0,05 et 0,7 g/cm³.

4. Mélange de constituants selon la revendication 1 ou 3, **caractérisé en ce que** l'enrobage est constitué de carbonate de calcium, de carbonate de baryum ou de carbonate de magnésium.

5. Mélange de constituants selon la revendication 1 ou 3, **caractérisé en ce que** l'enrobage est constitué de sulfate de calcium ou de sulfate de baryum.

6. Mélange de constituants selon la revendication1 ou 3, **caractérisé en ce que** l'enrobage est constitué d'oxyde de silicium ou d'oxyde d'aluminium.
